# EUROPEAN PATENT APPLICATION

(11) **EP 4 801 105 A1**
(43) Date of publication of application: **02.09.2026**
(21) Application number: 24881713.2
(22) Date of filing: 25.10.2024
(51) Int. Cl.: H04W 28/06

(54) **DATA PROCESSING METHOD, TERMINAL, AND PROCESSOR READABLE STORAGE MEDIUM**

(30) Priority: 25.10.2023 CN 202311390846
(71) Applicant: Datang Mobile Communications Equipment Co., Ltd., Beijing 100085 (CN)
(72) Inventor: ZHAO, Yali, Beijing, 100085 (CN); BERTRAND, Pierre, Beijing, 100085 (CN); CHEN, Li, Beijing, 100085 (CN)
(74) Representative: Maiwald GmbH
(86) International application number: PCT/CN2024/127196
(87) International publication number: WO 2025/087352

(57) **Abstract**

A data processing method, a terminal, and a processor readable storage medium are provided. The method comprises: receiving by PDCP entity of terminal a PDCP SDU from a high layer; and when a first condition is met and PDCP SDU is low-priority data, starting a first timer for PDCP SDU, wherein the first condition comprises at least one of: receiving first instruction information from a network device for a first target object, wherein the first instruction information is for instructing to configure a PDCP SDU priority-based discard or a PSI-based discard for the first target object; receiving second instruction information from the network device for a second target object, wherein the second instruction information is for instructing to activate PDCP SDU priority-based discard or PSI-based discard for the second target object; and one or more serving cells serving the terminal is in a congestion state.

## Description

### CROSS-REFERENCE TO RELATED APPLICATION

The present disclosure claims priority to Chinese patent application No. 202311390846.6 filed before CNIPA on October 25, 2023, entitled "Data Processing Method, Terminal and Processor Readable Storage Medium", the entire contents of which are incorporated herein by reference.

### TECHNICAL FIELD

The present disclosure relates to the field of communication technologies, and in particular, to a data processing method, a terminal, and a processor-readable storage medium.

### BACKGROUND

Extended Reality (XR) and Cloud Game (CG) are among the most important 5th-Generation (5G) media applications, and have requirements of low latency, high throughput, and high reliability, which demand transmission of large volumes of data in a short time. XR is a general term for different types of reality, referring to all real-virtual integrated environments and human-computer interactions generated by computer technology and devices. XR includes representative forms such as Augmented Reality (AR), Mixed Reality (MR), and Virtual Reality (VR). Currently, there is no solution for how terminals discard data packets in the event of network congestion.

### SUMMARY

The present disclosure provides a data processing method, a terminal, and a processor-readable storage medium, solving the problem of the lack of a solution for a terminal to discard a data packet in network congestion scenarios.

Some embodiments of the present disclosure provide a data processing method. The method includes:
receiving, by a Packet Data Convergence Protocol (PDCP) entity of a terminal, a PDCP Service Data Unit (SDU) from a higher layer;
when a first condition is met and the PDCP SDU is low-priority data, starting a first timer for the PDCP SDU by the terminal; wherein the first condition includes at least one of the following:
   that first indication information sent by a network device for a first target object is received, wherein the first target object includes one or more of the terminal, a radio bearer corresponding to the PDCP entity, or the PDCP entity, and the first indication information is used to indicate configuring, for the first target object, discard based on PDCP SDU priority or discard based on PDU Set Importance (PSI);
   that second indication information sent by the network device for a second target object is received, wherein the second target object includes one or more of the terminal, a radio bearer corresponding to the PDCP entity, or the PDCP entity, and the second indication information is used to indicate activating, for the second target object, discard based on PDCP SDU priority or discard based on PSI;
   that one or more serving cells serving the terminal are in a congested state.

In some embodiments, the method further includes:
when a second condition is met, determining, by the terminal, that the PDCP SDU is low-priority data, wherein the second condition includes at least one of the following:
that a priority value of the PDCP SDU is less than or equal to a first threshold;
that a PSI value corresponding to the Packet Data Unit Set (PDU Set) to which the PDCP SDU belongs is less than or equal to a second threshold;
wherein the first threshold and/or the second threshold are determined by the terminal; or the first threshold and/or the second threshold are agreed upon by a protocol; or the first threshold and/or the second threshold are configured by the network device.

In some embodiments, the method further includes:
when a third condition is met, stopping, by the terminal, the first timer that is running; or,
when a third condition is met and if the first timer expires, skipping performing PDCP SDU discard triggered by timeout of the first timer; wherein the third condition includes at least one of the following:

that third indication information sent by the network device for the first target object is received, wherein the third indication information is used to indicate unconfiguring, for the first target object, discard based on PDCP SDU priority discard or discard based on PSI;
that fourth indication information sent by the network device for the second target object is received, wherein the fourth indication information is used to indicate deactivating, for the second target object, discard based on PDCP SDU priority or discard based on PSI;
that one or more serving cells serving the terminal are in a non-congested state.

In some embodiments, the one or more serving cells serving the terminal are determined to be in a congested state or non-congested state by at least one of the following manners:
that the terminal receives fifth indication information sent by the network device, wherein the fifth indication information is used to indicate whether one or more serving cells serving the terminal are in the congested state or non-congested state;
that the terminal determines whether the one or more serving cells serving the terminal are in the congested state or non-congested state.

In some embodiments, starting the first timer for the PDCP SDU by the terminal includes:
starting the first timer and a PDCP discard timer simultaneously for the PDCP SDU by the terminal; or, starting the first timer for the PDCP SDU by the terminal.

In some embodiments, when starting the first timer and the PDCP discard timer simultaneously for the PDCP SDU by the terminal, the method further includes: if either the first timer or the PDCP discard timer expires, performing at least one of the following operations:
discarding the PDCP SDU by the terminal;
stopping one or both, that are running, of the first timer and the PDCP discard timer by the terminal.

In some embodiments, when starting the first timer for the PDCP SDU by the terminal, the method further includes: discarding the PDCP SDU by the terminal if the first timer expires.

In some embodiments, discarding the PDCP SDU by the terminal includes at least one of the following:
directly discarding the PDCP SDU by the terminal;
when the terminal determines that the PDCP Packet Data Unit (PDU) corresponding to the PDCP SDU has been delivered to a lower layer of the terminal, notifying the lower layer to discard the PDCP PDU;
discarding the PDCP SDU by the terminal if the first condition is met.

In some embodiments, the method further includes:
when starting the first timer and the PDCP discard timer simultaneously for the PDCP SDU by the terminal, determining by the terminal whether to trigger a Delay Status Report (DSR) based on the PDCP discard timer or the first timer; or,
when starting the first timer for the PDCP SDU by the terminal, determining by the terminal whether to trigger the DSR based on the first timer; or,
when starting the first timer for the PDCP SDU by the terminal, prohibiting triggering the DSR.

In some embodiments, determining based on the first timer whether to trigger the DSR includes: triggering the DSR by the terminal if the remaining running time of the first timer is less than a third threshold.

In some embodiments, the method further includes: for PDCP SDUs already stored in a buffer of the terminal, when the first condition is met and the PDCP SDU in the buffer are low-priority data, starting the first timer for the PDCP SDU in the buffer by the terminal.

In some embodiments, a duration of the first timer corresponding to the PDCP SDU in the buffer is determined by at least one of the following:
that the duration of the first timer corresponding to the PDCP SDU in the buffer is equal to a first timer duration configured by a network device;
that the duration of the first timer corresponding to the PDCP SDU in the buffer is equal to the difference between the first timer duration configured by the network device and a target duration, wherein the target duration is either the difference between a moment when the first timer is started and a moment when the terminal receives the PDCP SDU, or a duration that the PDCP discard timer corresponding to the PDCP SDU has been running.

In some embodiments, the first timer duration is configured by the network device for each terminal, each radio bearer of the terminal, or the PDCP entity of the terminal.

Some embodiments of the present disclosure provide a terminal. The terminal includes: a memory, a transceiver, and a processor; wherein the memory is configured to store a computer program; the transceiver is configured to send and receive data under the control of the processor; the processor is configured to read the computer program in the memory and perform the following operations:
receiving, by a Packet Data Convergence Protocol (PDCP) entity of a terminal, a PDCP Service Data Unit (SDU) from a higher layer;
when a first condition is met and the PDCP SDU is low-priority data, starting a first timer for the PDCP SDU; wherein the first condition includes at least one of the following:
   that first indication information sent by a network device for a first target object is received, wherein the first target object includes one or more of the terminal, a radio bearer corresponding to the PDCP entity, or the PDCP entity, and the first indication information is used to indicate configuring, for the first target object, discard based on PDCP SDU priority or discard based on PDU Set Importance (PSI);
   that second indication information sent by the network device for a second target object is received, wherein the second target object includes one or more of the terminal, a radio bearer corresponding to the PDCP entity, or the PDCP entity, and the second indication information is used to indicate activating, for the second target object, discard based on PDCP SDU priority or discard based on PSI;
   that one or more serving cells serving the terminal are in a congested state.

In some embodiments, the processor is configured to read the computer program in the memory and perform the following operations: when a second condition is met, determining that the PDCP SDU is low-priority data, wherein the second condition includes at least one of the following:
that a priority value of the PDCP SDU is less than or equal to a first threshold;
that a PSI value corresponding to the Packet Data Unit Set (PDU Set) to which the PDCP SDU belongs is less than or equal to a second threshold;
wherein the first threshold and/or the second threshold are determined by the terminal; or the first threshold and/or the second threshold are agreed upon by a protocol; or the first threshold and/or the second threshold are configured by the network device.

In some embodiments, the processor is configured to read the computer program in the memory and perform the following operations:
when a third condition is met, stopping the first timer that is running; or,
when a third condition is met and if the first timer expires, skipping performing PDCP SDU discard triggered by timeout of the first timer; wherein the third condition includes at least one of the following:
   that third indication information sent by the network device for the first target object is received, wherein the third indication information is used to indicate unconfiguring, for the first target object, discard based on PDCP SDU priority discard or discard based on PSI;
   that fourth indication information sent by the network device for the second target object is received, wherein the fourth indication information is used to indicate deactivating, for the second target object, discard based on PDCP SDU priority or discard based on PSI;
   that one or more serving cells serving the terminal are in a non-congested state.

In some embodiments, the one or more serving cells serving the terminal are determined to be in a congested state or non-congested state by at least one of the following manners:
that fifth indication information sent by the network device is received, wherein the fifth indication information is used to indicate whether one or more serving cells serving the terminal are in the congested state or non-congested state;
that the terminal determines whether the one or more serving cells serving the terminal are in the congested state or non-congested state.

In some embodiments, the processor is configured to read the computer program in the memory and perform the following operations:
starting the first timer and a PDCP discard timer simultaneously for the PDCP SDU; or, starting the first timer for the PDCP SDU.

In some embodiments, when starting the first timer and the PDCP discard timer simultaneously for the PDCP SDU, the processor is configured to read the computer program in the memory and perform the following operations:
if either the first timer or the PDCP discard timer expires, performing at least one of the following operations:
discarding the PDCP SDU by the terminal;
stopping one or both, that are running, of the first timer and the PDCP discard timer by the terminal.

In some embodiments, when starting the first timer for the PDCP SDU, the processor is configured to read the computer program in the memory and perform the following operations: discarding the PDCP SDU if the first timer expires.

In some embodiments, the processor is configured to read the computer program in the memory and perform at least one of the following operations:
directly discarding the PDCP SDU;
when the terminal determines that the PDCP Packet Data Unit (PDU) corresponding to the PDCP SDU has been delivered to a lower layer of the terminal, notifying the lower layer to discard the PDCP PDU;
discarding the PDCP SDU by the terminal if the first condition is met.

In some embodiments, the processor is configured to read the computer program in the memory and perform the following operations:
when starting the first timer and the PDCP discard timer simultaneously for the PDCP SDU, determining whether to trigger a Delay Status Report (DSR) based on the PDCP discard timer or the first timer; or,
when starting the first timer for the PDCP SDU, determining based on the first timer whether to trigger the DSR; or,
when starting the first timer for the PDCP SDU by the terminal, prohibiting triggering the DSR.

In some embodiments, the processor is configured to read the computer program in the memory and perform the following operations: triggering the DSR if the remaining running time of the first timer is less than a third threshold.

In some embodiments, the processor is configured to read the computer program in the memory and perform the following operations: for PDCP SDUs already stored in a buffer of the terminal, when the first condition is met and the PDCP SDU in the buffer are low-priority data, starting the first timer for the PDCP SDU in the buffer.

In some embodiments, a duration of the first timer corresponding to the PDCP SDU in the buffer is determined by at least one of the following:
that the duration of the first timer corresponding to the PDCP SDU in the buffer is equal to a first timer duration configured by a network device;
that the duration of the first timer corresponding to the PDCP SDU in the buffer is equal to the difference between the first timer duration configured by the network device and a target duration, wherein the target duration is either the difference between a moment when the first timer is started and a moment when the terminal receives the PDCP SDU, or a duration that the PDCP discard timer corresponding to the PDCP SDU has been running.

In some embodiments, the first timer duration is configured by the network device for each terminal, each radio bearer of the terminal, or the PDCP entity of the terminal.

A terminal is provided in the embodiments of the present disclosure. The terminal includes: a receiving unit, configured to receive a PDCP Service Data Unit (SDU) from a higher layer; a starting unit, configured to when a first condition is met and the PDCP SDU is low-priority data, start a first timer for the PDCP SDU by the terminal; wherein the first condition includes at least one of the following:
that first indication information sent by a network device for a first target object is received, wherein the first target object includes one or more of the terminal, a radio bearer corresponding to the PDCP entity, or the PDCP entity, and the first indication information is used to indicate configuring, for the first target object, discard based on PDCP SDU priority or discard based on PDU Set Importance (PSI);
that second indication information sent by the network device for a second target object is received, wherein the second target object includes one or more of the terminal, a radio bearer corresponding to the PDCP entity, or the PDCP entity, and the second indication information is used to indicate activating, for the second target object, discard based on PDCP SDU priority or discard based on PSI;
that one or more serving cells serving the terminal are in a congested state.

Some embodiments of the present disclosure provide a processor-readable storage medium, wherein the processor-readable storage medium stores a computer program configured to cause a processor to execute the steps of the data processing method according to the above.

The above technical solution of the present disclosure has the following beneficial effects.

In the embodiments of the present disclosure, the PDCP entity of the terminal receives the PDCP SDU from the higher layer. If the PDCP SDU is low-priority data and the first condition is met, the terminal starts the first timer for the PDCP SDU, so that PDCP SDU discard can be triggered based on the first timer, solving the problem of how the terminal discards data packets in the event of network congestion.

### BRIEF DESCRIPTION OF THE DRAWINGS

FIG. 1 is a schematic diagram of data packet definition in XR service modeling according to some embodiments of the present disclosure;
FIG. 2 is a schematic diagram of the relationship between XR service frames and PDUs according to some embodiments of the present disclosure;
FIG. 3 is a flowchart of a data processing method according to some embodiments of the present disclosure;
FIG. 4 is a first block diagram of a terminal according to some embodiments of the present disclosure;
FIG. 5 is a second block diagram of a terminal according to some embodiments of the present disclosure.

### DETAILED DESCRIPTION

To make the technical problems to be solved, technical solutions, and advantages of the present disclosure clearer, the specific embodiments will be described in detail with reference to the accompanying drawings hereinafter. In the following description, specific details such as specific configurations and components are provided only to assist in comprehensive understanding of the embodiments of the present disclosure. Therefore, it should be apparent to those skilled in the art that various changes and modifications can be made to the embodiments described herein without departing from the scope and spirit of the present disclosure. In addition, descriptions of known functions and constructions are omitted for clarity and conciseness.

It should be understood that "one embodiment" or "an embodiment" mentioned throughout the specification means that a specific feature, structure, or characteristic related to the embodiment is included in at least one embodiment of the present disclosure. Thus, the appearances of "in one embodiment" or "in an embodiment" in various places throughout the specification are not necessarily referring to the same embodiment. Furthermore, these specific features, structures, or characteristics may be combined in any suitable manner in one or more embodiments.

In various embodiments of the present disclosure, it should be understood that the sequence numbers of the following processes do not imply an execution order, and the execution order of each process should be determined by its functions and internal logic, and should not constitute any limitation on the implementation process of the embodiments of the present disclosure.

In addition, the terms "system" and "network" are used interchangeably herein.

The technical solutions provided in the embodiments of the present disclosure may be applied to multiple systems, especially 5G systems and sixth-generation mobile communication (6th-Generation, 6G) systems. For example, the applicable system may be a Global System for Mobile Communications (GSM) system, a Code Division Multiple Access (CDMA) system, a Wideband Code Division Multiple Access (WCDMA) General Packet Radio Service (GPRS) system, a Long Term Evolution (LTE) system, an LTE Frequency Division Duplex (FDD) system, an LTE Time Division Duplex (TDD) system, an Advanced Long Term Evolution (LTE-A) system, a Universal Mobile Telecommunication System (UMTS), a Worldwide Interoperability for Microwave Access (WiMAX) system, a 5G New Radio (NR) system, a 6G system, etc. Each of these systems includes terminal devices and network devices. The system may further include a core network part, such as an Evolved Packet System (EPS), a 5G System (5GS), a 6G system, etc.

Both the network device and the terminal device may use one or more antennas for Multi-Input Multi-Output (MIMO) transmission, and the MIMO transmission may be Single User MIMO (SU-MIMO) or Multi User MIMO (MU-MIMO). According to the form and number of antenna combinations, MIMO transmission may be Two-Dimensional MIMO (2D-MIMO), Three-Dimensional MIMO (3D-MIMO), Full Dimension MIMO (FD-MIMO), or Massive MIMO (massive-MIMO), and may also be diversity transmission, precoding transmission, beamforming transmission, etc.

In the embodiments of the present disclosure, the term "and/or" describes an association relationship between associated objects, indicating that there may be three relationships. For example, A and/or B may indicate: A exists alone, both A and B exist, and B exists alone. The character "/" generally indicates an "or" relationship between associated objects.

In the embodiments of the present disclosure, the term "a plurality of" means two or more, and other quantifiers are similar.

The technical solutions in the embodiments of the present disclosure will be clearly and completely described below with reference to the accompanying drawings in the embodiments of the present disclosure. Obviously, the described embodiments are only a part of the embodiments of the present disclosure, not all of them. All other embodiments obtained by those of ordinary skill in the art based on the embodiments of the present disclosure without creative efforts shall fall within the protection scope of the present disclosure.

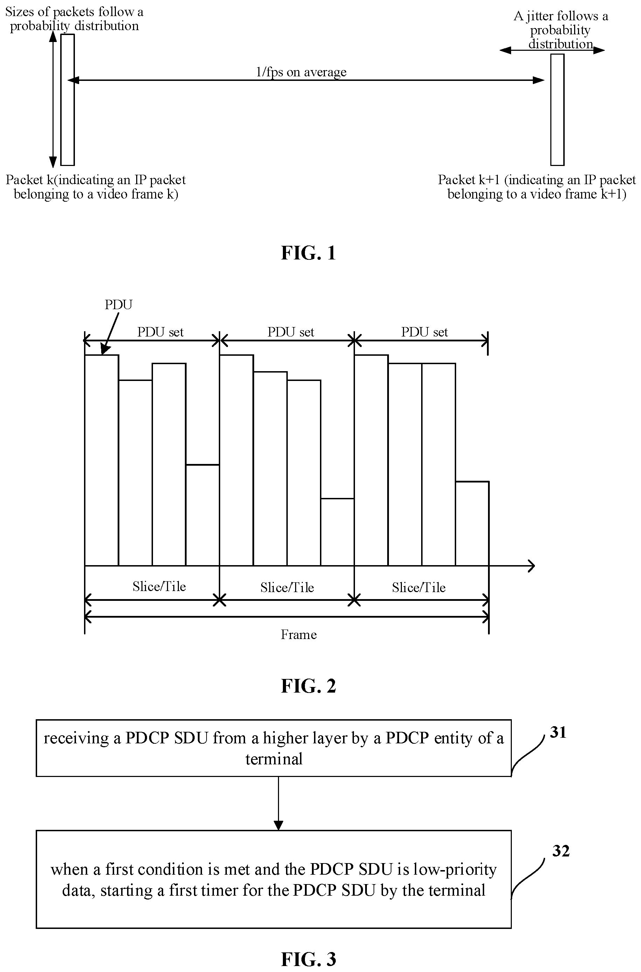

The following describes the XR service:
The XR service is modeled according to data frames (Frames) (as shown in FIG. 1). For example, each data frame may correspond to one XR video frame, the same frame may be divided into one or more PDU Sets, and one PDU Set includes a plurality of PDUs (as shown in FIG. 2). In the embodiments of the present disclosure, a data frame is equivalent to a data burst, or one data burst includes a plurality of data frames.

The characteristics of the XR service are as follows:
Video frame rates include 15 fps, 30 fps, 60 fps, 90 fps, 120 fps, etc., with corresponding periods of 66.6 ms, 33.3 ms, 16.66 ms, 8.87 ms; where fps represents the frame rate, that is, the number of frames transmitted per second; ms is a time unit, millisecond.

Frame arrival time has unpredictable jitter; latency requirement is 10 ms or in the range of 7-15 ms; bit rate: 10-200 Mbps.

Quality of Service (QoS) parameters of the PDU Set include at least:
PDU Set Error Rate (PSER); PDU Set Delay Budget (PSDB); PDU Set Integrity Indication (PSII), used to indicate whether the application layer needs to use all PDUs of this PDU Set.

The present disclosure provides a data processing method, a terminal, and a processor-readable storage medium, which can solve the problem of how a terminal discards data packets through a timer in the event of network congestion. The method and the terminal are based on the same application concept. Since the principles of solving problems by the method and the terminal are similar, the implementation of the method and the terminal can be referred to each other, and repeated descriptions will not be made.

As shown in FIG. 3, an embodiment of the present disclosure provides a data processing method, including the following steps:
Step 31: receiving by a PDCP entity of the terminal a PDCP SDU from a higher layer.
   In some embodiments, the higher layer refers to a higher layer of the terminal itself, such as an Internet Protocol (IP) layer.
Step 32: when a first condition is met and the PDCP SDU is low-priority data, starting by the terminal a first timer for the PDCP SDU.

Where the first condition includes at least one of the following:
first indication information sent by a network device for a first target object is received, where the first target object includes one or more of following: the terminal, the radio bearer corresponding to the PDCP entity, and the PDCP entity; and the first indication information is used to indicate configuring PDCP SDU priority-based discard or PDU Set Importance (PSI)-based discard for the first target object;
second indication information sent by a network device for a second target object is received, where the second target object includes one or more of following: the terminal, the radio bearer corresponding to the PDCP entity, and the PDCP entity, and the second indication information is used to indicate activating PDCP SDU priority-based discard or PSI-based discard for the second target object;
one or more serving cells serving the terminal are in a congested state.

In some embodiments, the terminal may determine that the one or more serving cells serving the terminal are in a congested state by at least one of the following manners:
the terminal receives fifth indication information sent by the network device, where the fifth indication information is used to indicate that one or more serving cells serving the terminal are in a congested state;
the terminal determines that one or more serving cells serving the terminal are in a congested state.

For example, the terminal may determine that the one or more serving cells serving the terminal are in a congested state based on the fifth indication information sent by the network device, or the terminal may independently determine that the one or more serving cells serving the terminal are in a congested state based on its own implementation.

In some embodiments, the first timer duration is configured by the network device for each terminal, for each radio bearer of the terminal, or for the PDCP entity of the terminal.

For example, the network device configuring the first timer duration for each radio bearer of the terminal may mean that the network device separately configures a corresponding first timer duration for each radio bearer among all or part of the radio bearers of the terminal. The network device configuring the first timer duration for the PDCP entity of the terminal may mean that the network device separately configures a corresponding first timer duration for each PDCP entity among all or part of the PDCP entities of the terminal.

It should be noted that the first target object and the second target object may be the same or different; for example, both the first target object and the second target object may be the terminal, or the first target object may be the terminal while the second target object may be the PDCP entity of the terminal or the radio bearer corresponding to the PDCP entity, etc. The embodiments of the present disclosure are not limited thereto.

In the above solution, the PDCP entity of the terminal receives the PDCP SDU from the higher layer. If the PDCP SDU is low-priority data and the first condition is met, the terminal starts the first timer for the PDCP SDU, so that PDCP SDU discard can be triggered based on the first timer, solving the problem of data packet discard in the terminal in the event of network congestion.

In some embodiments, the terminal may maintain only the first timer for the PDCP SDU. For example, the PDCP entity of the terminal receives the PDCP SDU from the higher layer. If the PDCP SDU is low-priority data and the first condition is met, the terminal starts the first timer for the PDCP SDU, realizing PDCP SDU discard triggered based on the first timer.

In some embodiments, the terminal may simultaneously maintain the first timer and the PDCP discard timer for the PDCP SDU. If the PDCP SDU is low-priority data and the first condition is met, the terminal starts the first timer for the PDCP SDU, and the PDCP discard timer may be started or not. Further, if the terminal starts the first timer for the PDCP SDU without starting the PDCP discard timer, the terminal triggers PDCP SDU discard based on the first timer; if the terminal simultaneously starts the first timer and the PDCP discard timer for the PDCP SDU, the terminal triggers PDCP SDU discard based on the first timer or the PDCP discard timer.

In some embodiments, the method further includes: when a second condition is met, determining by the terminal that the PDCP SDU is low-priority data, where the second condition includes at least one of the following:
the priority value of the PDCP SDU is less than or equal to a first threshold; for example: the priority value of the PDCP SDU < the first threshold, or the priority value of the PDCP SDU ≤ the first threshold.

The PSI value corresponding to the PDU Set to which the PDCP SDU belongs is less than or equal to a second threshold; for example: the PSI value corresponding to the PDU Set to which the PDCP SDU belongs < the second threshold, or the PSI value corresponding to the PDU Set to which the PDCP SDU belongs ≤ the second threshold.

The first threshold and/or the second threshold are determined by the terminal; or the first threshold and/or the second threshold are agreed upon by a protocol; or the first threshold and/or the second threshold are configured by the network device.

In some embodiments, the method further includes:
when a third condition is met, stopping by the terminal the running first timer;
   or,
when the third condition is met, if the first timer expires, skipping performing PDCP SDU discard triggered by timeout of the first timer by the terminal;
where the third condition includes at least one of the following:
   receiving third indication information sent by the network device for the first target object, where the third indication information is used to indicate de-configuring PDCP SDU priority-based discard or PSI-based discard for the first target object;
   receiving fourth indication information sent by the network device for the second target object, where the fourth indication information is used to indicate de-activating, for the second target object, PDCP SDU priority-based discard or PSI-based discard; one or more serving cells serving the terminal are in a non-congested state.

For example, the PDCP entity of the terminal receives the PDCP SDU from the higher layer. If the first condition is met and the PDCP SDU is low-priority data, the terminal starts the first timer for the PDCP SDU; if the third condition is met while the first timer is running, the terminal stops the first timer and ceases to trigger PDCP SDU discard based on the first timer.

For another example, the PDCP entity of the terminal receives the PDCP SDU from the higher layer. If the first condition is met and the PDCP SDU is low-priority data, the terminal starts the first timer for the PDCP SDU; if the third condition is met when the first timer expires, the terminal skips performing PDCP SDU discard triggered by the timeout of the first timer.

It should be noted here that the terminal skipping performing PDCP SDU discard triggered by the timeout of the first timer means that the terminal will not discard the PDCP SDU due to the expiration of the first timer corresponding to the PDCP SDU, but it does not exclude that the terminal may discard the PDCP SDU for other reasons.

It should also be noted that de-configuring PDCP SDU priority-based discard or PSI-based discard for the first target object may also be referred to as not configuring PDCP SDU priority-based discard or PSI-based discard for the first target object. Specifically, it may mean that the RRC reconfiguration signaling sent by the network device does not provide configuration information corresponding to PDCP SDU priority-based discard or PSI-based discard for the first target object. In this case, the terminal considers the PDCP SDU priority-based discard or PSI-based discard configured for the first target object as being de-configured or unconfigured, and if there was a previous related configuration, the related configuration shall also be deemed invalid or need to be released. For example: if the network device configures PDCP SDU priority-based discard or PSI-based discard for the first target object, the first indication information indicates that the configuration is no longer valid or needs to be released.

In some embodiments, the terminal may determine that the one or more serving cells serving the terminal are in a non-congested state by at least one of the following manners:
the terminal receives fifth indication information sent by the network device, where the fifth indication information is used to indicate that one or more serving cells serving the terminal are in a non-congested state;
the terminal determines that one or more serving cells serving the terminal are in a non-congested state.

For example, the terminal may determine that the one or more serving cells serving the terminal are in a non-congested state based on the fifth indication information sent by the network device, or the terminal may independently determine that the one or more serving cells serving the terminal are in a non-congested state based on its own implementation.

In some embodiments, starting by the terminal a first timer for the PDCP SDU includes:
starting by the terminal the first timer and the PDCP discard timer simultaneously for the PDCP SDU; or,
starting by the terminal the first timer for the PDCP SDU.

It should be noted that the terminal starting the first timer for the PDCP SDU means that when the PDCP discard timer is still maintained for the PDCP SDU, the terminal starts the first timer for the PDCP SDU without starting the PDCP discard timer.

In some embodiments, when the terminal starts the first timer and the PDCP discard timer simultaneously for the PDCP SDU, the method further includes: if either the first timer or the PDCP discard timer expires, performing at least one of the following operations:
discarding by the terminal the PDCP SDU;
stopping the running timer between the first timer and the PDCP discard timer.

For example: when the terminal starts the first timer and the PDCP discard timer simultaneously for the PDCP SDU, and if the first timer expires first, then the terminal discards the PDCP SDU and/or stops the PDCP discard timer; or if the PDCP discard timer expires first, then the terminal discards the PDCP SDU and/or stops the first timer.

In some embodiments, when the terminal starts the first timer for the PDCP SDU (that is, the terminal starts the first timer for the PDCP SDU without starting the PDCP discard timer), the method further includes:
discarding by the terminal the PDCP SDU if the first timer expires.

In some embodiments, the terminal discarding the PDCP SDU includes at least one of the following:
directly discarding by the terminal the PDCP SDU;
when the terminal determines that the PDCP Packet Data Unit (PDU) corresponding to the PDCP SDU has been delivered to the lower layer, notifying the terminal's lower layer to discard the PDCP PDU; for example: the terminal's lower layer may be a Radio Link Control (RLC) layer or a Medium Access Control (MAC) layer;
discarding by the terminal the PDCP SDU if the first condition is met.

For example: when the terminal starts the first timer and the PDCP discard timer simultaneously for the PDCP SDU, discarding by the terminal the PDCP SDU based on the expiration of either the first timer or the PDCP discard timer may include at least one of the following:
directly discarding by the terminal the PDCP SDU;
when the terminal determines that the PDCP Packet Data Unit (PDU) corresponding to the PDCP SDU has been delivered to the lower layer, notifying the terminal's lower layer to discard the PDCP PDU;
discarding by the terminal the PDCP SDU if the first condition is met.

For another example: when the terminal starts the first timer for the PDCP SDU, discarding by the terminal the PDCP SDU based on the expiration of the first timer may include at least one of the following:
directly notifying by the terminal the PDCP SDU;
when the terminal determines that the PDCP Packet Data Unit (PDU) corresponding to the PDCP SDU has been delivered to the lower layer, notifying the terminal's lower layer to discard the PDCP PDU;
discarding by the terminal the PDCP SDU if the first condition is met.

In some embodiments, the method further includes: when the terminal starts the first timer and the PDCP discard timer simultaneously for the PDCP SDU, determining by the terminal based on the PDCP discard timer or the first timer whether to trigger a Delay Status Report (DSR);
or,
when the terminal starts the first timer for the PDCP SDU (that is, the terminal starts the first timer for the PDCP SDU without starting the PDCP discard timer), determining by the terminal based on the first timer whether to trigger the DSR;
   or,
when the terminal starts the first timer for the PDCP SDU (for example, the terminal may start both the first timer and the PDCP discard timer for the PDCP SDU; or the terminal starts the first timer for the PDCP SDU without starting the PDCP discard timer), prohibiting triggering.

In some embodiments, determining based on the first timer whether to trigger the DSR includes:
triggering the DSR by the terminal if the remaining running time of the first timer is less than a third threshold.

For example: when the terminal starts both the first timer and the PDCP discard timer for the PDCP SDU, if the terminal determines whether to trigger the DSR based on the first timer, it may specifically trigger the DSR if the remaining running time of the first timer is less than the third threshold. Or, when the terminal starts the first timer for the PDCP SDU without starting the PDCP discard timer, if the terminal determines whether to trigger the DSR based on the first timer, it may specifically trigger the DSR if the remaining running time of the first timer is less than the third threshold.

In some embodiments, prohibiting triggering the DSR means prohibiting triggering the DSR when the remaining running time of the PDCP discard timer or the first timer corresponding to the PDCP SDU is less than a preset threshold (such as the third threshold).

In some embodiments, the method further includes:
for a PDCP SDU already stored in the terminal's buffer, if the first condition is met and the PDCP SDU in the buffer is low-priority data, starting by the terminal the first timer for the PDCP SDU in the buffer.

In this embodiment, the first timer is started for the PDCP SDU already stored in the terminal's buffer, so that the discard of the PDCP SDU in the terminal's buffer can be triggered based on the first timer, ensuring that the terminal can discard the data packets in the buffer in the event of network congestion.

In some embodiments, the method further includes: for a PDCP SDU already stored in the terminal's buffer, if the first condition is met and the PDCP SDU in the buffer is low-priority data, discarding directly by the terminal the PDCP SDU or discarding by the terminal the PDCP SDU when the PDCP discard timer expires.

In some embodiments, the first timer duration corresponding to the PDCP SDU in the buffer is determined by at least one of the following manners:
the first timer duration corresponding to the PDCP SDU in the buffer is equal to the first timer duration configured by the network device;
the first timer duration corresponding to the PDCP SDU in the buffer is equal to the difference between the first timer duration configured by the network device and a target duration, where the target duration is either the difference between the moment when the first timer is started and the moment when the terminal receives the PDCP SDU, or the duration that the PDCP discard timer corresponding to the PDCP SDU has been running.

For example, the network device may configure the first timer duration for the terminal. For example, the PDCP entity of the terminal receives the PDCP SDU from the higher layer. If the PDCP SDU is low-priority data and the first condition is met, the terminal starts the first timer for the PDCP SDU, and the duration of the first timer may be the first timer duration configured by the network device for the terminal. The first timer duration corresponding to the PDCP SDU in the buffer may be equal to the first timer duration configured by the network device, or equal to the difference between the first timer duration configured by the network device and the target duration. The target duration is either the difference between the moment when the first timer corresponding to the PDCP SDU in the buffer is started (that is, the current moment) and the moment when the terminal receives the PDCP SDU, or the duration that the PDCP discard timer corresponding to the PDCP SDU has been running.

In some embodiments, the first timer duration is configured by the network device for each terminal, for each radio bearer of the terminal, or for the PDCP entity of the terminal.

For example, the network device configuring the first timer duration for each radio bearer of the terminal may mean that the network device separately configures a corresponding first timer duration for each radio bearer among all or part of the radio bearers of the terminal. The network device configuring the first timer duration for the PDCP entity of the terminal may mean that the network device separately configures a corresponding first timer duration for each PDCP entity among all or part of the PDCP entities of the terminal.

The terminal in the embodiments of the present disclosure may be a device that provides voice and/or data connectivity to users, a handheld device with wireless connection function, or other processing devices connected to a wireless modem. In different systems, the name of the terminal may also be different. For example, in 5G systems or 6G systems, the terminal may be referred to as User Equipment (UE). A wireless terminal may communicate with one or more Core Networks (CN) through a Radio Access Network (RAN). A wireless terminal may be a mobile terminal, such as a mobile phone (or referred to as a "cellular" phone) and a computer with a mobile terminal. For example, it may be a portable, pocket-sized, handheld, computer-built-in, or vehicle-mounted mobile device that exchanges language and/or data with the radio access network. For example, devices such as Personal Communication Service (PCS) phones, cordless phones, Session Initiated Protocol (SIP) phones, Wireless Local Loop (WLL) stations, Personal Digital Assistants (PDAs), etc. A wireless terminal may also be referred to as a system, a subscriber unit, a subscriber station, a mobile station, a mobile, a remote station, an access point, a remote terminal, an access terminal, a user terminal, a user agent, a user device, which is not limited in the embodiments of the present disclosure.

The network device in the embodiments of the present disclosure may be a base station, and the base station may include a plurality of cells serving terminals. According to different specific application scenarios, the base station may also be referred to as an access point, or a device in the access network that communicates with wireless terminals through one or more sectors on the air interface, or other names. The network device may be used to exchange the received air interface frames with Internet Protocol (IP) packets as a router between the wireless terminal and the rest of the access network, where the rest of the access network may include an Internet Protocol (IP) communication network. The network device may also coordinate the attribute management of the air interface. For example, the network device in the embodiments of the present disclosure may be a Base Transceiver Station (BTS) in Global System for Mobile Communications (GSM) or Code Division Multiple Access (CDMA), a network device (NodeB) in Wideband Code Division Multiple Access (WCDMA), an evolved network device (evolutional Node B, eNB or e-NodeB) in Long Term Evolution (LTE) system, a 5G base station (gNB) in next generation system, a Home Evolved Node B (HeNB), a relay node, a home base station (femto), a pico base station (pico), a 6G base station, etc., which is not limited in the embodiments of the present disclosure. In some network structures, the network device may include a Centralized Unit (CU) node and a Distributed Unit (DU) node, and the centralized unit and the distributed unit may also be geographically separated.

The data processing method of the present disclosure will be described below with reference to specific embodiments:
Embodiment 1: the terminal simultaneously maintains the first timer and the PDCP discard timer for one PDCP SDU. When the first timer expires or either the first timer or the PDCP discard timer expires, the terminal discards the PDCP SDU; if the first condition is not met, the terminal does not perform PDCP SDU discard triggered by the timeout of the first timer when the first timer expires; or stop the first timer when the first condition is not met.

Step 1: the terminal receives configuration information sent by the network device;
the configuration information may configure one first timer for the terminal, or separately configure a corresponding first timer for all or part of the radio bearers of the terminal, or separately configure one first timer for all or part of the PDCP entities of the terminal. In some embodiments, the configuration information may further separately configure a corresponding PDCP discard timer for all or part of the radio bearers or PDCP entities of the terminal.

Where the value of the first timer duration may be 0 or a value greater than 0.
Step 2: the first timer is started;
The PDCP entity of the terminal receives the PDCP SDU from the higher layer. If the first condition is met and the PDCP SDU is low-priority data, the terminal starts the first timer for the PDCP SDU. The higher layer here refers to a higher layer of the terminal itself, such as the IP layer.

In some embodiments, the terminal starting the first timer for the PDCP SDU includes at least one of the following:
receiving by the PDCP entity of the terminal the PDCP SDU from the higher layer; if the first condition is met and the PDCP SDU is low-priority data, starting the first timer for the PDCP SDU without starting the PDCP discard timer;
receiving, by the PDCP entity of the terminal, the PDCP SDU from the higher layer; if the first condition is met and the PDCP SDU is low-priority data, simultaneously starting the PDCP discard timer and the first timer for the PDCP SDU.

In some embodiments, in other cases (such as the first condition is not met and/or the PDCP SDU is not low-priority data), the terminal does not need to start the first timer.

The first condition includes at least one of the following:
receiving first indication information sent by a network device for a first target object, where the first target object is the terminal, or the radio bearer corresponding to the PDCP entity, or the PDCP entity; the first indication information is used to indicate configuring PDCP SDU priority-based discard or PSI-based discard for the first target object;
receiving second indication information sent by a network device for a second target object, where the second target object is the terminal, or the radio bearer corresponding to the PDCP entity, or the PDCP entity; the second indication information is used to indicate activating PDCP SDU priority-based discard or PSI-based discard for the second target object;
one or more serving cells serving the terminal are in a congested state.

It should be noted that the first condition not being met here may mean that at least one of the above is not met (or referred to as meeting the third condition), such as the network device not configuring PDCP SDU priority-based discard or PSI-based discard for the first target object (or the network device de-configuring PDCP SDU priority-based discard or PSI-based discard for the first target object), or the network device not activating PDCP SDU priority-based discard or PSI-based discard for the second target object (or the network device deactivating, for the second target object, PDCP SDU priority-based discard or PSI-based discard), or one or more serving cells serving the terminal being in a non-congested state, etc.

It should also be noted that the first target object and the second target object may be the same or different; for example, both the first target object and the second target object may be the terminal, or the first target object may be the terminal while the second target object may be the PDCP entity of the terminal or the radio bearer corresponding to the PDCP entity, etc. The embodiments of the present disclosure are not limited thereto.

In some embodiments, the terminal may determine that the one or more serving cells serving the terminal are in a congested state by at least one of the following manners:
receiving by the terminal fifth indication information sent by the network device, where the fifth indication information is used to indicate that one or more serving cells serving the terminal are in a congested state (that is, the current network is in a congested state);
independently determining by the terminal that one or more serving cells serving the terminal are in a congested state (that is, the current network is in a congested state).

In some embodiments, how the terminal determines that the PDCP SDU is low-priority data depends on the terminal's implementation. For example, the terminal determines that the PDCP SDU is low-priority data when the second condition is met. The second condition includes at least one of the following:
the priority value of the PDCP SDU is less than or equal to the first threshold (for example: the priority value of the PDCP SDU < the first threshold, or the priority value of the PDCP SDU ≤ the first threshold);
the PSI value corresponding to the PDU Set to which the PDCP SDU belongs is less than or equal to the second threshold (for example: the PSI value < the second threshold, or the PSI value ≤ the second threshold).

The first threshold and/or the second threshold are determined by the terminal; or the first threshold and/or the second threshold are preset (for example, may be preconfigured in a protocol or referred to as agreed upon by a protocol); or the first threshold and/or the second threshold are configured by the network device, etc. The embodiments of the present disclosure are not limited thereto.

Step 3a: the terminal performs a discard operation on the PDCP SDU.

Manner 1: if the first timer expires, the terminal discards the PDCP SDU.

In some embodiments, the terminal discarding the PDCP SDU includes at least one of the following:
directly discarding by the terminal the PDCP SDU;
when the terminal determines that the PDCP PDU corresponding to the PDCP SDU has been delivered to the lower layer (such as the RLC layer or the MAC layer), notifying the terminal's lower layer to discard the PDCP PDU;
discarding by the terminal the PDCP SDU if the first condition is met.

In some embodiments, the terminal may further determine whether to trigger the DSR based on the first timer. For example: the terminal triggers the DSR if the remaining running time of the first timer is less than the third threshold. The third threshold may be determined by the terminal's implementation, or preset (for example, may be preconfigured in a protocol or referred to as agreed upon by a protocol), or configured by the network device, etc. The embodiments of the present disclosure are not limited thereto.

Manner 2: if either the first timer or the PDCP discard timer expires, the terminal discards the PDCP SDU and/or stops the running timer between the first timer and the PDCP discard timer.

For example: if the PDCP discard timer expires first, the terminal discards the PDCP SDU (for example: the terminal may directly discard the PDCP SDU, or notify the terminal's lower layer to discard the PDCP PDU when the terminal determines that the PDCP PDU corresponding to the PDCP SDU has been delivered to the lower layer).

For example: if the first timer expires first, the terminal discards the PDCP SDU, or the terminal discards the PDCP SDU if the first condition is met (for example: the terminal may directly discard the PDCP SDU, or notify the terminal's lower layer to discard the PDCP PDU when the terminal determines that the PDCP PDU corresponding to the PDCP SDU has been delivered to the lower layer).

For example: if either the PDCP discard timer or the first timer expires, the running timer between the first timer and the PDCP discard timer is stopped.

In some embodiments, the terminal may further determine whether to trigger the DSR based on the PDCP discard timer or the first timer. For example: triggering the DSR based on the first timer may specifically be: that the terminal triggers the DSR if the remaining running time of the first timer is less than the third threshold.

In some embodiments, if the first timer is running, triggering the DSR is prohibited. For example: when the first timer is running, triggering the DSR is prohibited if the remaining running time of the first timer corresponding to the PDCP SDU is less than the third threshold or the remaining running time of the PDCP discard timer corresponding to the PDCP SDU is lower than the preset threshold.

In some embodiments, Step 3b: when the third condition is met, the terminal stops the running first timer.

In some embodiments, Step 3c: when the third condition is met, if the first timer expires, the terminal does not perform PDCP SDU discard triggered by the timeout of the first timer.

The third condition includes at least one of the following:
receiving third indication information sent by the network device for the first target object, where the third indication information is used to indicate de-configuring PDCP SDU priority-based discard or PSI-based discard for the first target object;
receiving fourth indication information sent by the network device for the second target object, where the fourth indication information is used to indicate deactivating, for the second target object, PDCP SDU priority-based discard or PSI-based discard;
one or more serving cells serving the terminal are in a non-congested state.

In some embodiments, the terminal may determine that the one or more serving cells serving the terminal are in a non-congested state by at least one of the following manners:
receiving, by the terminal, fifth indication information sent by the network device, where the fifth indication information is used to indicate that one or more serving cells serving the terminal are in a non-congested state (that is, the current network is in a non-congested state);
independently determining by the terminal that one or more serving cells serving the terminal are in a non-congested state (that is, the current network is in a non-congested state).

It should be noted that the terminal not performing PDCP SDU discard triggered by the timeout of the first timer means that the terminal will not discard the PDCP SDU due to the expiration of the first timer corresponding to the PDCP SDU, but it does not exclude that the terminal may discard the PDCP SDU for other reasons.

Embodiment 2: the terminal starts the first timer for one PDCP SDU only when the first condition is met and the PDCP SDU is low-priority data (the PDCP discard timer may be started or not); or when the first condition is met, the PDCP SDU is low-priority data, and the PDCP SDU has been buffered in the terminal's buffer, the first timer is started for the PDCP SDU already buffered in the terminal's buffer, or the terminal directly discards it, or waits for the PDCP discard timer corresponding to the PDCP SDU to expire before discarding it.
Step 1: the terminal receives configuration information sent by the network device;
the configuration information may configure one first timer for the terminal, or separately configure a corresponding first timer for all or part of the radio bearers of the terminal, or separately configure one first timer for all or part of the PDCP entities of the terminal. In some embodiments, the configuration information may further separately configure a corresponding PDCP discard timer for all or part of the radio bearers or PDCP entities of the terminal.

The value of the first timer duration may be 0 or a value greater than 0.

In some embodiments, the terminal may determine the duration of the first timer corresponding to the PDCP SDU in the buffer by at least one of the following manners:
equal to the first timer duration configured by the network device;
equal to the difference between the first timer duration configured by the network device and the target duration, where the target duration is either the difference between the moment when the first timer is started and the moment when the terminal receives the PDCP SDU, or the duration for which the PDCP discard timer corresponding to the PDCP SDU has been running.

Step 2: the first timer is started;
Case 1: the PDCP entity of the terminal receives the PDCP SDU from the higher layer. If the first condition is met and the PDCP SDU is low-priority data, the terminal starts the first timer for the PDCP SDU. The higher layer here refers to a higher layer of the terminal itself, such as the IP layer.

In some embodiments, the terminal starting the first timer for the PDCP SDU includes at least one of the following:
receiving by the PDCP entity of the terminal the PDCP SDU from the higher layer. If the first condition is met and the PDCP SDU is low-priority data, the terminal only starts the first timer for the PDCP SDU without starting the PDCP discard timer;
in other cases (such as the first condition is not met and/or the PDCP SDU is not low-priority data), the terminal does not need to start the first timer.

The PDCP entity of the terminal receives the PDCP SDU from the higher layer. If the first condition is met and the PDCP SDU is low-priority data, the terminal simultaneously starts the first timer and the PDCP discard timer for the PDCP SDU;
in other cases (such as the first condition is not met and/or the PDCP SDU is not low-priority data), the terminal does not need to start the first timer.

The first condition includes at least one of the following:
receiving first indication information sent by a network device for a first target object, where the first target object is the terminal, or the radio bearer corresponding to the PDCP entity, or the PDCP entity; the first indication information is used to indicate configuring PDCP SDU priority-based discard or PSI-based discard for the first target object;
receiving second indication information sent by a network device for a second target object, where the second target object is the terminal, or the radio bearer corresponding to the PDCP entity, or the PDCP entity; the second indication information is used to indicate activating PDCP SDU priority-based discard or PSI-based discard for the second target object;
one or more serving cells serving the terminal are in a congested state.

It should be noted that the first condition not being met here may mean that at least one of the above is not met, such as the network device does not configure PDCP SDU priority-based discard or PSI-based discard for the first target object (or the network device de-configures PDCP SDU priority-based discard or PSI-based discard for the first target object), or the network device does not activate PDCP SDU priority-based discard or PSI-based discard for the second target object (or the network device deactivates, for the second target object, PDCP SDU priority-based discard or PSI-based discard), or one or more serving cells serving the terminal are in a non-congested state, etc.

It should also be noted that the first target object and the second target object may be the same or different; for example, both the first target object and the second target object may be the terminal, or the first target object may be the terminal while the second target object may be the PDCP entity of the terminal or the radio bearer corresponding to the PDCP entity, etc. The embodiments of the present disclosure are not limited thereto.

In some embodiments, the terminal may determine that the one or more serving cells serving the terminal are in a congested state by at least one of the following manners:
the terminal receives fifth indication information sent by the network device, where the fifth indication information is used to indicate that one or more serving cells serving the terminal are in a congested state (that is, the current network is in a congested state);
the terminal independently determines that one or more serving cells serving the terminal are in a congested state (that is, the current network is in a congested state).

In some embodiments, how the terminal determines that the PDCP SDU is low-priority data depends on the terminal's implementation. For example: the terminal determines that the PDCP SDU is low-priority data when the second condition is met. The second condition includes at least one of the following:
the priority value of the PDCP SDU is less than or equal to the first threshold (for example: the priority value of the PDCP SDU < the first threshold, or the priority value of the PDCP SDU ≤ the first threshold);
the PSI value corresponding to the PDU Set to which the PDCP SDU belongs is less than or equal to the second threshold (for example: the PSI value < the second threshold, or the PSI value ≤ the second threshold).

The first threshold and/or the second threshold are determined by the terminal; or the first threshold and/or the second threshold are preset (for example, may be preconfigured in a protocol or referred to as agreed upon by a protocol); or the first threshold and/or the second threshold are configured by the network device, etc. The embodiments of the present disclosure are not limited thereto.

Case 2: if the PDCP SDU has been buffered in the terminal's buffer, and the first condition is met and the PDCP SDU buffered in the terminal's buffer is low-priority data, the first timer is started for the PDCP SDU buffered in the terminal's buffer, the terminal discards it directly, or waits for the PDCP discard timer corresponding to the PDCP SDU to expire before discarding it.

Step 3a: the terminal performs a discard operation on the PDCP SDU.

Manner 1: if the first timer expires, the terminal discards the PDCP SDU; in some embodiments, the terminal discarding the PDCP SDU includes at least one of the following:
- directly discarding the PDCP SDU by the terminal;
- if the terminal determines that the PDCP PDU corresponding to the PDCP SDU has been delivered to the lower layer (e.g., the RLC layer or the MAC layer), notifying the terminal's lower layer to discard the PDCP PDU;
- discarding by the terminal the PDCP SDU if the first condition is met.

In some embodiments, the terminal may further determine whether to trigger the Delay Status Report (DSR) based on the first timer. For example: the terminal triggers the DSR if the remaining running time of the first timer is less than the third threshold. The third threshold may be determined by the terminal's implementation, preset (e.g., preconfigured in a protocol or referred to as agreed upon by a protocol), or configured by the network device, etc. The embodiments of the present disclosure are not limited thereto.

Manner 2: if the terminal simultaneously starts a PDCP discard timer and the first timer for one PDCP SDU, and either the first timer or the PDCP discard timer expires, the terminal discards the PDCP SDU and/or stops the running timer between the first timer and the PDCP discard timer.

For example: if the PDCP discard timer expires first, the terminal discards the PDCP SDU (e.g., the terminal may directly discard the PDCP SDU, or notify the terminal's lower layer to discard the PDCP PDU when the terminal determines that the PDCP PDU corresponding to the PDCP SDU has been delivered to the lower layer).

For example: if the first timer expires first, the terminal discards the PDCP SDU, or the terminal discards the PDCP SDU if the first condition is met (e.g., the terminal may directly discard the PDCP SDU, or notify the terminal's lower layer to discard the PDCP PDU when the terminal determines that the PDCP PDU corresponding to the PDCP SDU has been delivered to the lower layer).

For example: if either the PDCP discard timer or the first timer expires, the running timer between the first timer and the PDCP discard timer is stopped.

In some embodiments, the terminal may further determine whether to trigger the DSR based on the PDCP discard timer or the first timer. For example: triggering the DSR based on the first timer may specifically be: the terminal triggers the DSR if the remaining running time of the first timer is less than the third threshold.

In some embodiments, if the first timer is running, triggering the DSR is prohibited. For example: when the first timer is running, triggering the DSR is prohibited if the remaining running time of the first timer corresponding to the PDCP SDU is less than the third threshold or the remaining running time of the PDCP discard timer corresponding to the PDCP SDU is lower than the preset threshold.

Step 3b: when the third condition is met, the terminal stops the running first timer.

Step 3c: when the third condition is met, if the first timer expires, the terminal does not perform PDCP SDU discard triggered by the timeout of the first timer.

The third condition includes at least one of the following:
- receiving third indication information sent by the network device for the first target object, where the third indication information is used to indicate de-configuring PDCP SDU priority-based discard or PDU Set Importance (PSI)-based discard for the first target object;
- receiving fourth indication information sent by the network device for the second target object, where the fourth indication information is used to indicate deactivating, for the second target object, PDCP SDU priority-based discard or PSI-based discard;
- one or more serving cells serving the terminal are in a non-congested state.

In some embodiments, the terminal may determine that the one or more serving cells serving the terminal are in a non-congested state by at least one of the following manners:
- receiving by the terminal fifth indication information sent by the network device, where the fifth indication information is used to indicate that one or more serving cells serving the terminal are in a non-congested state (i.e., the current network is in a non-congested state);
- independently determining by the terminal that one or more serving cells serving the terminal are in a non-congested state (i.e., the current network is in a non-congested state).

It should be noted that the terminal not performing PDCP SDU discard triggered by the timeout of the first timer means that the terminal will not discard the PDCP SDU due to the expiration of the first timer corresponding to the PDCP SDU, but it does not exclude that the terminal may discard the PDCP SDU for other reasons.

Embodiment 3: when the first condition is not met (or referred to as meeting the third condition), the terminal only starts the PDCP discard timer for the PDCP SDU received from the higher layer; when the first condition is met, the terminal only starts the first timer for one PDCP SDU; when the first condition is met, the terminal needs to start the first timer for the PDCP SDU already buffered in the terminal's buffer or discard it directly.

Step 1: the terminal receives configuration information sent by the network device; wherein the configuration information may configure one first timer for the terminal, or separately configure a corresponding first timer for all or part of the radio bearers of the terminal, or separately configure one first timer for all or part of the PDCP entities of the terminal. In some embodiments, the configuration information may further separately configure a corresponding PDCP discard timer for all or part of the radio bearers or PDCP entities of the terminal.

The value of the first timer duration may be 0 or a value greater than 0.

In some embodiments, the terminal may determine the first timer duration corresponding to the PDCP SDU in the buffer by at least one of the following manners:
- equal to the first timer duration configured by the network device;
- equal to the difference between the first timer duration configured by the network device and a target duration, where the target duration is either the difference between the moment when the first timer is started and the moment when the terminal receives the PDCP SDU, or the duration for which the PDCP discard timer corresponding to the PDCP SDU has been running.

Step 2: the first timer is started.

Case 1: the PDCP entity of the terminal receives the PDCP SDU from the higher layer. If the first condition is met and the PDCP SDU is low-priority data, the terminal only starts the first timer for the PDCP SDU; otherwise, only starts the PDCP discard timer.

The first condition includes at least one of the following:
- receiving first indication information sent by the network device for the first target object, where the first target object is the terminal, or the radio bearer corresponding to the PDCP entity, or the PDCP entity; the first indication information is used to indicate configuring PDCP SDU priority-based discard or PSI-based discard for the first target object;
- receiving second indication information sent by the network device for the second target object, where the second target object is the terminal, or the radio bearer corresponding to the PDCP entity, or the PDCP entity; the second indication information is used to indicate activating PDCP SDU priority-based discard or PSI-based discard for the second target object;
- one or more serving cells serving the terminal are in a congested state.

It should be noted that the first condition not being met herein may mean that at least one of the above is not satisfied (or understood as meeting the third condition), such as the network device does not configure PDCP SDU priority-based discard or PSI-based discard for the first target object (or the network device de-configures PDCP SDU priority-based discard or PSI-based discard for the first target object), or the network device does not activate PDCP SDU priority-based discard or PSI-based discard for the second target object (or the network device deactivates, for the second target object, PDCP SDU priority-based discard or PSI-based discard), or one or more serving cells serving the terminal are in a non-congested state, etc.

It should also be noted that the first target object and the second target object may be the same or different; for example, both the first target object and the second target object may be the terminal, or the first target object may be the terminal while the second target object may be the PDCP entity of the terminal or the radio bearer corresponding to the PDCP entity, etc. The embodiments of the present disclosure are not limited thereto.

In some embodiments, the terminal may determine that the one or more serving cells serving the terminal are in a congested state by at least one of the following manners:
- receiving by the terminal the fifth indication information sent by the network device, where the fifth indication information is used to indicate that one or more serving cells serving the terminal are in a congested state (i.e., the current network is in a congested state);
- independently determining by the terminal that one or more serving cells serving the terminal are in a congested state (i.e., the current network is in a congested state).

Case 2: if the PDCP SDU has been buffered in the terminal's buffer, and the first condition is met and the PDCP SDU buffered in the terminal's buffer is low-priority data, the first timer is started for the PDCP SDU buffered in the terminal's buffer, the terminal discards it directly, or waits for the PDCP discard timer corresponding to the PDCP SDU to expire before discarding it.

In some embodiments, if the first timer is started for the PDCP SDU in the buffer, the originally running PDCP discard timer may continue to run or stop running.

In some embodiments, how the terminal determines that the PDCP SDU is low-priority data depends on the terminal's implementation. For example: the terminal determines that the PDCP SDU is low-priority data when the second condition is met. The second condition includes at least one of the following:
- the priority value of the PDCP SDU is less than or equal to the first threshold (e.g., the priority value of the PDCP SDU < the first threshold, or the priority value of the PDCP SDU ≤ the first threshold);
- the PSI value corresponding to the PDU Set to which the PDCP SDU belongs is less than or equal to the second threshold (e.g., the PSI value < the second threshold, or the PSI value ≤ the second threshold).

The first threshold and/or the second threshold are determined by the terminal; or the first threshold and/or the second threshold are preset (e.g., may be preconfigured in a protocol or referred to as agreed upon by a protocol); or the first threshold and/or the second threshold are configured by the network device, etc. The embodiments of the present disclosure are not limited thereto.

Step 3a: the terminal performs a discard operation on the PDCP SDU.

If the first timer expires, the terminal discards the PDCP SDU; in some embodiments, the terminal discarding the PDCP SDU includes at least one of the following:
- directly discarding by the terminal the PDCP SDU;
- if the terminal determines that the PDCP PDU corresponding to the PDCP SDU has been delivered to the lower layer (e.g., the RLC layer or the MAC layer), notifying the terminal's lower layer to discard the PDCP PDU;
- discarding by the terminal the PDCP SDU if the first condition is met.

In some embodiments, the terminal may further determine whether to trigger the DSR based on the first timer. For example: the terminal triggers the DSR if the remaining running time of the first timer is less than the third threshold. The third threshold may be determined by the terminal's implementation, preset (e.g., preconfigured in a protocol or referred to as agreed upon by a protocol), or configured by the network device, etc. The embodiments of the present disclosure are not limited thereto.

In some embodiments, if the first timer is running, triggering the DSR is prohibited. For example: when the first timer is running, triggering the DSR is prohibited if the remaining running time of the first timer corresponding to the PDCP SDU is less than the third threshold.

Step 3b: when the third condition is met, if the first timer expires, the terminal does not perform PDCP SDU discard triggered by the timeout of the first timer.

Step 3c: when the third condition is met, the terminal stops the running first timer.

The third condition includes at least one of the following:
- receiving third indication information sent by the network device for the first target object, where the third indication information is used to indicate de-configuring PDCP SDU priority-based discard or PSI-based discard for the first target object;
- receiving fourth indication information sent by the network device for the second target object, where the fourth indication information is used to indicate deactivating, for the second target object, PDCP SDU priority-based discard or PSI-based discard;
- one or more serving cells serving the terminal are in a non-congested state.

In some embodiments, the terminal may determine that the one or more serving cells serving the terminal are in a non-congested state by at least one of the following manners:
- receiving by the terminal the fifth indication information sent by the network device, where the fifth indication information is used to indicate that one or more serving cells serving the terminal are in a non-congested state (i.e., the current network is in a non-congested state);
- independently determining by the terminal that one or more serving cells serving the terminal are in a non-congested state (i.e., the current network is in a non-congested state).

It should be noted that the terminal not performing PDCP SDU discard triggered by the timeout of the first timer means that the terminal will not discard the PDCP SDU due to the expiration of the first timer corresponding to the PDCP SDU, but it does not exclude that the terminal may discard the PDCP SDU for other reasons.

The foregoing embodiments describe the data processing method of the present disclosure, and the following embodiments further describe the corresponding apparatus and terminal in combination with the accompanying drawings.

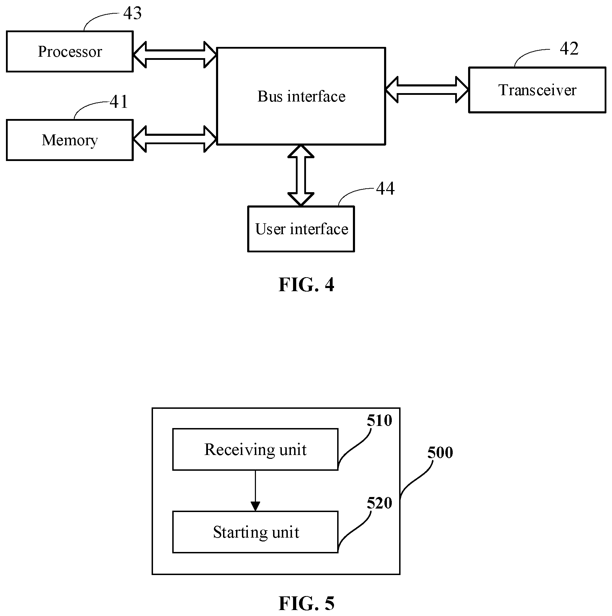

As shown in FIG. 4, an embodiment of the present disclosure provides a terminal, including a memory 41, a transceiver 42, and a processor 43, where the memory 41 is configured to store a computer program; the transceiver 42 is configured to send and receive data under the control of the processor 43; for example, the transceiver 42 is configured to receive and send data under the control of the processor 43; and the processor 43 is configured to read the computer program in the memory 41 and perform the following operations:
- receiving by the Packet Data Convergence Protocol (PDCP) entity of the terminal a PDCP Service Data Unit (SDU) from a higher layer;
- starting the first timer for the PDCP SDU when the first condition is met and the PDCP SDU is low-priority data;
wherein the first condition includes at least one of the following:
- receiving first indication information sent by the network device for the first target object, where the first target object includes one or more of the terminal, the radio bearer corresponding to the PDCP entity, and the PDCP entity, and the first indication information is used to indicate configuring PDCP SDU priority-based discard or PSI-based discard for the first target object;
- receiving second indication information sent by the network device for the second target object, where the second target object includes one or more of following: the terminal, the radio bearer corresponding to the PDCP entity, and the PDCP entity, and the second indication information is used to indicate activating PDCP SDU priority-based discard or PSI-based discard for the second target object;
- one or more serving cells serving the terminal are in a congested state.

In some embodiments, the processor 43 is configured to read the computer program in the memory 41 and perform the following operations: when the second condition is met, determining that the PDCP SDU is low-priority data, where the second condition includes at least one of the following:
- the priority value of the PDCP SDU is less than or equal to the first threshold;
- the PSI value corresponding to the Packet Data Unit Set (PDU Set) to which the PDCP SDU belongs is less than or equal to the second threshold; wherein the first threshold and/or the second threshold are determined by the terminal; or the first threshold and/or the second threshold are agreed upon by a protocol; or the first threshold and/or the second threshold are configured by the network device.

In some embodiments, the processor 43 is configured to read the computer program in the memory 41 and perform the following operations:
- stopping the running first timer when the third condition is met;
- or, when the third condition is met, if the first timer expires, skipping performing PDCP SDU discard triggered by the timeout of the first timer; wherein the third condition includes at least one of the following:
- receiving third indication information sent by the network device for the first target object, where the third indication information is used to indicate de-configuring PDCP SDU priority-based discard or PSI-based discard for the first target object;
- receiving fourth indication information sent by the network device for the second target object, where the fourth indication information is used to indicate deactivating, for the second target object, PDCP SDU priority-based discard or PSI-based discard;
- one or more serving cells serving the terminal are in a non-congested state.

In some embodiments, the one or more serving cells serving the terminal are determined to be in a congested state or non-congested state by at least one of the following manners:
- receiving fifth indication information sent by the network device, where the fifth indication information is used to indicate whether one or more serving cells serving the terminal are in a congested state or non-congested state;
- the terminal determines whether one or more serving cells serving the terminal are in a congested state or non-congested state.

In some embodiments, the processor 43 is configured to read the computer program in the memory 41 and perform the following operations:
- simultaneously starting the first timer and the PDCP discard timer for the PDCP SDU;
- or, starting the first timer for the PDCP SDU.

In some embodiments, when the first timer and the PDCP discard timer are simultaneously started for the PDCP SDU, the processor 43 is configured to read the computer program in the memory 41 and perform the following operations:
if either the first timer or the PDCP discard timer expires, performing at least one of the following operations:
- discarding the PDCP SDU;
- stopping the running timer between the first timer and the PDCP discard timer.

In some embodiments, when the first timer is started for the PDCP SDU, the processor 43 is configured to read the computer program in the memory 41 and perform the following operations:
discarding the PDCP SDU if the first timer expires.

In some embodiments, the processor 43 is configured to read the computer program in the memory 41 and perform at least one of the following operations:
- directly discarding the PDCP SDU;
- when it is determined that the PDCP Packet Data Unit (PDU) corresponding to the PDCP SDU has been delivered to the lower layer, notifying the terminal's lower layer to discard the PDCP PDU;
- discarding the PDCP SDU if the first condition is met.

In some embodiments, the processor 43 is configured to read the computer program in the memory 41 and perform the following operations:
- when the first timer and the PDCP discard timer are simultaneously started for the PDCP SDU, determining based on the PDCP discard timer or the first timer whether to trigger the DSR;
- or, when the first timer is started for the PDCP SDU, determining based on the first timer whether to trigger the DSR;
- or, when the terminal starts the first timer for the PDCP SDU, prohibit triggering the DSR.

In some embodiments, the processor 43 is configured to read the computer program in the memory 41 and perform the following operations:
triggering the DSR when the remaining running time of the first timer is less than the third threshold.

In some embodiments, the processor 43 is configured to read the computer program in the memory 41 and perform the following operations:
for the PDCP SDU already stored in the terminal's buffer, if the first condition is met and the PDCP SDU in the buffer is low-priority data, starting the first timer for the PDCP SDU in the buffer.

In some embodiments, the first timer duration corresponding to the PDCP SDU in the buffer is determined by at least one of the following manners:
- the first timer duration corresponding to the PDCP SDU in the buffer is equal to the first timer duration configured by the network device;
- the first timer duration corresponding to the PDCP SDU in the buffer is equal to the difference between the first timer duration configured by the network device and a target duration, where the target duration is either the difference between the moment when the first timer is started and the moment when the terminal receives the PDCP SDU, or the duration for which the PDCP discard timer corresponding to the PDCP SDU has been running.

In some embodiments, the first timer duration is configured by the network device for each terminal, each radio bearer of the terminal, or the PDCP entity of the terminal.

In FIG. 4, the bus architecture may include any number of interconnected buses and bridges, and specifically, the various circuits of the one or more processors represented by the processor 43 and the memory represented by the memory 41 are linked together. The bus architecture may also link various other circuits such as peripheral devices, voltage regulators, and power management circuits, which are well known in the art and thus will not be further described herein. The bus interface provides an interface. The transceiver 42 may be a plurality of components, i.e., including a transmitter and a receiver, providing means for communicating with various other devices over a transmission medium including wireless channels, wired channels, optical cables, etc. For different user devices, the user interface 44 may also be an interface capable of connecting external or internal required devices, and the connected devices include but are not limited to a keypad, a display, a speaker, a microphone, a joystick, etc.

The processor 43 is responsible for managing the bus architecture and general processing, and the memory 41 may store data used by the processor 43 when performing operations.

In some embodiments, the processor 43 may be a CPU (Central Processing Unit), an ASIC (Application Specific Integrated Circuit), an FPGA (Field-Programmable Gate Array), or a CPLD (Complex Programmable Logic Device), and the processor may also adopt a multi-core architecture.

By invoking the computer program stored in the memory, the processor is configured to execute any of the methods provided in the embodiments of the present disclosure according to the obtained executable instructions. The processor and the memory may also be physically separated.

It should be noted that the terminal provided in the embodiments of the present disclosure can implement all the method steps implemented in the foregoing data processing method embodiments and achieve the same technical effects. The same parts and beneficial effects as those in the method embodiments will not be described in detail herein.

As shown in FIG. 5, an embodiment of the present disclosure provides a terminal 500, including:
a receiving unit 510, configured to receive a PDCP SDU from a higher layer;
a starting unit 520, configured to start a first timer for the PDCP SDU when the first condition is met and the PDCP SDU is low-priority data; wherein the first condition includes at least one of the following:
   - receiving first indication information sent by the network device for the first target object, where the first target object includes one or more of following: the terminal, the radio bearer corresponding to the PDCP entity, and the PDCP entity, and the first indication information is used to indicate configuring PDCP SDU priority-based discard or PSI-based discard for the first target object;
   - receiving second indication information sent by the network device for the second target object, where the second target object includes one or more of following: the terminal, the radio bearer corresponding to the PDCP entity, and the PDCP entity, and the second indication information is used to indicate activating PDCP SDU priority-based discard or PSI-based discard for the second target object;
   - one or more serving cells serving the terminal are in a congested state.

In some embodiments, the terminal 500 further includes:
a determining unit, configured to determine that the PDCP SDU is low-priority data when the second condition is met, where the second condition includes at least one of the following:
- the priority value of the PDCP SDU is less than or equal to the first threshold;
- the PSI value corresponding to the Packet Data Unit Set (PDU Set) to which the PDCP SDU belongs is less than or equal to the second threshold; wherein the first threshold and/or the second threshold are determined by the terminal; or the first threshold and/or the second threshold are agreed upon by a protocol; or the first threshold and/or the second threshold are configured by the network device.

In some embodiments, the terminal 500 further includes:
a stop unit, configured to stop the running first timer when the third condition is met;
   or,
a first processing unit, configured to skip performing PDCP SDU discard triggered by the timeout of the first timer if the first timer expires when the third condition is met;
wherein the third condition includes at least one of the following:
   - receiving third indication information sent by the network device for the first target object, where the third indication information is used to indicate de-configuring PDCP SDU priority-based discard or PSI-based discard for the first target object;
   - receiving fourth indication information sent by the network device for the second target object, where the fourth indication information is used to indicate deactivating, for the second target object, PDCP SDU priority-based discard or PSI-based discard;
   - one or more serving cells serving the terminal are in a non-congested state.

In some embodiments, the one or more serving cells serving the terminal are determined to be in a congested state or non-congested state by at least one of the following manners:
- receiving fifth indication information sent by the network device, where the fifth indication information is used to indicate whether one or more serving cells serving the terminal are in a congested state or non-congested state;
- determining by the terminal whether one or more serving cells serving the terminal are in a congested state or non-congested state.

In some embodiments, the starting unit 520 is further configured to:
- simultaneously start the first timer and the PDCP discard timer for the PDCP SDU;
- or, start the first timer for the PDCP SDU.

In some embodiments, when the terminal simultaneously starts the first timer and the PDCP discard timer for the PDCP SDU, the terminal 500 further includes:
a second processing unit, configured to perform at least one of the following operations if either the first timer or the PDCP discard timer expires:
- discarding the PDCP SDU;
- stopping the running timer between the first timer and the PDCP discard timer.

In some embodiments, when the terminal starts the first timer for the PDCP SDU, the terminal 500 further includes: a discarding unit, configured to discard the PDCP SDU if the first timer expires.

In some embodiments, the second processing unit or the discarding unit is further configured to at least one of the following:
- directly discarding the PDCP SDU;
- when it is determined that the PDCP Packet Data Unit (PDU) corresponding to the PDCP SDU has been delivered to the lower layer, notifying the terminal's lower layer to discard the PDCP PDU;
- discarding the PDCP SDU if the first condition is met.

In some embodiments, the terminal 500 further includes:
a third processing unit, configured to determine whether to trigger the Delay Status Report (DSR) based on the PDCP discard timer or the first timer when the first timer and the PDCP discard timer are simultaneously started for the PDCP SDU;
   or,
a fourth processing unit, configured to determine whether to trigger the DSR based on the first timer when the first timer is started for the PDCP SDU;
   or,
a fifth processing unit, configured to prohibit triggering the DSR when the terminal starts the first timer for the PDCP SDU.

In some embodiments, the third processing unit or the fourth processing unit is further configured to:
trigger the DSR when the remaining running time of the first timer is less than the third threshold.

In some embodiments, the terminal 500 further includes:
a sixth processing unit, configured to start a first timer for the PDCP SDU in the buffer when the first condition is met and the PDCP SDU in the buffer is low-priority data, for the PDCP SDU already stored in the terminal's buffer.

In some embodiments, the first timer duration corresponding to the PDCP SDU in the buffer is determined by at least one of the following manners:
- the first timer duration corresponding to the PDCP SDU in the buffer is equal to the first timer duration configured by the network device;
- the first timer duration corresponding to the PDCP SDU in the buffer is equal to the difference between the first timer duration configured by the network device and a target duration, where the target duration is either the difference between the moment when the first timer is started and the moment when the terminal receives the PDCP SDU, or the duration that the PDCP discard timer corresponding to the PDCP SDU has been running.

In some embodiments, the first timer duration is configured by the network device for each terminal, each radio bearer of the terminal, or the PDCP entity of the terminal.

It should be noted that the terminal provided in the embodiments of the present disclosure can implement all the method steps implemented in the foregoing data processing method embodiments and achieve the same technical effects. The same parts and beneficial effects as those in the method embodiments will not be described in detail herein.

An embodiment of the present disclosure further provides a processor-readable storage medium, where the processor-readable storage medium stores a computer program configured to cause the processor to execute all the method steps implemented in the foregoing data processing method embodiments and achieve the same technical effects. The same parts and beneficial effects as those in the method embodiments will not be described in detail herein.

The processor-readable storage medium may be any available medium or data storage device accessible by a processor, including but not limited to magnetic memory (e.g., floppy disks, hard disks, magnetic tapes, magneto-optical disks (MO), etc.), optical memory (e.g., Compact Disks (CD), Digital Versatile Disks (DVD), Blu-ray Discs (BD), High-Definition Versatile Discs (HVD), etc.), and semiconductor memory (e.g., Read-Only Memory (ROM), Erasable Programmable Read-Only Memory (EPROM), Electrically Erasable Programmable Read-Only Memory (EEPROM), Non-Volatile Memory (NAND FLASH), Solid State Drives (SSD), etc.).

It should be noted that the division of units in the embodiments of the present disclosure is schematic and merely a logical function division, and there may be other division manners in actual implementation. In addition, functional units in the embodiments of the present disclosure may be integrated into one processing unit, or each unit may exist independently physically, or two or more units may be integrated into one unit. The integrated unit may be implemented in the form of hardware or a software functional unit.

When the integrated unit is implemented in the form of a software functional unit and sold or used as an independent product, it may be stored in a processor-readable storage medium. Based on this understanding, the technical solution of the present disclosure essentially or the part contributing to the related art, or all or part of the technical solution, may be embodied in the form of a software product. The computer software product is stored in a storage medium and includes several instructions to enable a computer device (which may be a personal computer, a server, a network device, etc.) or a processor to execute all or part of the steps of the method described in the embodiments of the present disclosure. The foregoing storage medium includes various media capable of storing program codes, such as a USB flash drive, a removable hard disk, a Read-Only Memory (ROM), a Random Access Memory (RAM), a magnetic disk, or an optical disk.

Those skilled in the art should understand that the embodiments of the present disclosure may be provided as a method, a system, or a computer program product. Therefore, the present disclosure may adopt the form of an entirely hardware embodiment, an entirely software embodiment, or an embodiment combining software and hardware. Moreover, the present disclosure may adopt the form of a computer program product implemented on one or more computer-usable storage media (including but not limited to magnetic memory and optical memory) containing computer-usable program codes.

The present disclosure is described with reference to flowcharts and/or block diagrams of methods, devices (systems), and computer program products according to the embodiments of the present disclosure. It should be understood that each flow and/or block in the flowcharts and/or block diagrams, and combinations of flows and/or blocks in the flowcharts and/or block diagrams, may be implemented by computer-executable instructions. These computer-executable instructions may be provided to a processor of a general-purpose computer, a special-purpose computer, an embedded processor, or other programmable data processing devices to generate a machine, such that the instructions executed by the processor of the computer or other programmable data processing devices generate an apparatus for implementing the functions specified in one or more flows in the flowcharts and/or one or more blocks in the block diagrams.

These processor-executable instructions may also be stored in a processor-readable memory that can guide a computer or other programmable data processing devices to work in a specific manner, such that the instructions stored in the processor-readable memory generate an article of manufacture including an instruction apparatus, which implements the functions specified in one or more flows in the flowcharts and/or one or more blocks in the block diagrams.

These processor-executable instructions may also be loaded onto a computer or other programmable data processing devices, such that a series of operational steps are performed on the computer or other programmable devices to generate computer-implemented processing, such that the instructions executed on the computer or other programmable devices provide steps for implementing the functions specified in one or more flows in the flowcharts and/or one or more blocks in the block diagrams.

In addition, it should be noted that in the apparatus and method of the present disclosure, each component or step may obviously be decomposed and/or recombined. These decompositions and/or recombinations should be regarded as equivalent solutions of the present disclosure. Furthermore, the steps of executing the series of processes described above may naturally be performed in chronological order as described, but they are not necessarily required to be performed in chronological order. Certain steps may be performed in parallel or independently of each other. For those of ordinary skill in the art, all or any steps or components of the method and apparatus of the present disclosure may be implemented in hardware, firmware, software, or a combination thereof in any computing device (including a processor, a storage medium, etc.) or a network of computing devices, which can be implemented by those of ordinary skill in the art using their basic programming skills after reading the description of the present disclosure.

It should be noted that it should be understood that the division of the foregoing modules is merely a division of logical functions, and in actual implementation, all or part of the modules may be integrated into a physical entity or physically separated. Moreover, these modules may all be implemented in the form of software invoked by a processing element; or all be implemented in the form of hardware; or some modules may be implemented in the form of software invoked by a processing element, and some modules in the form of hardware. For example, a certain module may be a separately provided processing element, or may be integrated into a chip of the foregoing apparatus. In addition, it may also be stored in the memory of the foregoing apparatus in the form of program code, and the function of the foregoing determining module is invoked and executed by a processing element of the foregoing apparatus. The implementation of other modules is similar. In addition, all or part of these modules may be integrated together or implemented independently. The processing element described herein may be an integrated circuit with signal processing capabilities. In the implementation process, each step of the foregoing method or each module described above may be completed by an integrated logic circuit of hardware in the processor element or an instruction in the form of software.

For example, each module, unit, subunit, or submodule may be one or more integrated circuits configured to implement the foregoing method, such as one or more Application-Specific Integrated Circuits (ASICs), one or more Digital Signal Processors (DSPs), or one or more Field-Programmable Gate Arrays (FPGAs). For another example, when the foregoing module is implemented in the form of program code scheduled by a processing element, the processing element may be a general-purpose processor, such as a Central Processing Unit (CPU) or another processor capable of invoking program code. For another example, these modules may be integrated together and implemented in the form of a System-on-a-Chip (SOC).

The terms "first" and "second" in the specification and claims of the present disclosure are used to distinguish similar objects and are not necessarily used to describe a specific order or sequence. It should be understood that the data used in this way may be interchanged under appropriate circumstances, so that the embodiments of the present disclosure described herein can be implemented in an order other than those illustrated or described herein. In addition, the terms "include", "have", and any variations thereof are intended to cover non-exclusive inclusion. For example, a process, method, system, product, or device including a series of steps or units is not necessarily limited to the clearly listed steps or units, but may include other steps or units not clearly listed or inherent to these processes, methods, products, or devices. In addition, the use of "and/or" in the specification and claims indicates at least one of the connected objects. For example, A and/or B and/or C indicates seven cases including A alone, B alone, C alone, both A and B, both B and C, both A and C, and both A, B, and C. Similarly, the use of "at least one of A and B" in the specification and claims should be understood as "A alone, B alone, or both A and B".

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. A data processing method, comprising:
receiving, by a Packet Data Convergence Protocol (PDCP) entity of a terminal, a PDCP Service Data Unit (SDU) from a higher layer;
when a first condition is met and the PDCP SDU is low-priority data, starting a first timer for the PDCP SDU by the terminal; wherein the first condition comprises at least one of the following:
that first indication information sent by a network device for a first target object is received, wherein the first target object comprises one or more of the terminal, a radio bearer corresponding to the PDCP entity, or the PDCP entity, and the first indication information is used to indicate configuring, for the first target object, discard based on PDCP SDU priority or discard based on PDU Set Importance (PSI);
that second indication information sent by the network device for a second target object is received, wherein the second target object comprises one or more of the terminal, a radio bearer corresponding to the PDCP entity, or the PDCP entity, and the second indication information is used to indicate activating, for the second target object, discard based on PDCP SDU priority or discard based on PSI;
that one or more serving cells serving the terminal are in a congested state.

2. The method according to claim 1, further comprising:
when a second condition is met, determining, by the terminal, that the PDCP SDU is low-priority data, wherein the second condition comprises at least one of the following:
that a priority value of the PDCP SDU is less than or equal to a first threshold;
that a PSI value corresponding to the Packet Data Unit Set (PDU Set) to which the PDCP SDU belongs is less than or equal to a second threshold;
wherein the first threshold and/or the second threshold are determined by the terminal; or the first threshold and/or the second threshold are agreed upon by a protocol; or the first threshold and/or the second threshold are configured by the network device.

3. The method according to claim 1, further comprising:
when a third condition is met, stopping, by the terminal, the first timer that is running;
or,
when a third condition is met and if the first timer expires, skipping performing PDCP SDU discard triggered by timeout of the first timer; wherein the third condition comprises at least one of the following:
that third indication information sent by the network device for the first target object is received, wherein the third indication information is used to indicate unconfiguring, for the first target object, discard based on PDCP SDU priority discard or discard based on PSI;
that fourth indication information sent by the network device for the second target object is received, wherein the fourth indication information is used to indicate deactivating, for the second target object, discard based on PDCP SDU priority or discard based on PSI;
that one or more serving cells serving the terminal are in a non-congested state.

4. The method according to claim 1 or 3, wherein the one or more serving cells serving the terminal are determined to be in a congested state or non-congested state by at least one of the following manners:
that the terminal receives fifth indication information sent by the network device, wherein the fifth indication information is used to indicate whether one or more serving cells serving the terminal are in the congested state or non-congested state;
that the terminal determines whether the one or more serving cells serving the terminal are in the congested state or non-congested state.

5. The method according to claim 1, wherein starting the first timer for the PDCP SDU by the terminal comprises:
starting the first timer and a PDCP discard timer simultaneously for the PDCP SDU by the terminal;
or,
starting the first timer for the PDCP SDU by the terminal.

6. The method according to claim 5, wherein when starting the first timer and the PDCP discard timer simultaneously for the PDCP SDU by the terminal, the method further comprises:
if either the first timer or the PDCP discard timer expires, performing at least one of the following operations:
discarding the PDCP SDU by the terminal;
stopping one or both, that are running, of the first timer and the PDCP discard timer by the terminal.

7. The method according to claim 5, wherein when starting the first timer for the PDCP SDU by the terminal, the method further comprises:
discarding the PDCP SDU by the terminal if the first timer expires.

8. The method according to claim 6 or 7, wherein discarding the PDCP SDU by the terminal comprises at least one of the following:
directly discarding the PDCP SDU by the terminal;
when the terminal determines that the PDCP Packet Data Unit (PDU) corresponding to the PDCP SDU has been delivered to a lower layer of the terminal, notifying the lower layer to discard the PDCP PDU;
discarding the PDCP SDU by the terminal if the first condition is met.

9. The method according to claim 4, further comprising:
when starting the first timer and the PDCP discard timer simultaneously for the PDCP SDU by the terminal, determining by the terminal whether to trigger a Delay Status Report (DSR) based on the PDCP discard timer or the first timer;
or,
when starting the first timer for the PDCP SDU by the terminal, determining by the terminal whether to trigger the DSR based on the first timer;
or,
when starting the first timer for the PDCP SDU by the terminal, prohibiting triggering the DSR.

10. The method according to claim 9, wherein determining based on the first timer whether to trigger the DSR comprises:
triggering the DSR by the terminal if the remaining running time of the first timer is less than a third threshold.

11. The method according to claim 1, further comprising:
for PDCP SDUs already stored in a buffer of the terminal, when the first condition is met and the PDCP SDU in the buffer are low-priority data, starting the first timer for the PDCP SDU in the buffer by the terminal.

12. The method according to claim 11, wherein a duration of the first timer corresponding to the PDCP SDU in the buffer is determined by at least one of the following:
that the duration of the first timer corresponding to the PDCP SDU in the buffer is equal to a first timer duration configured by a network device;
that the duration of the first timer corresponding to the PDCP SDU in the buffer is equal to the difference between the first timer duration configured by the network device and a target duration, wherein the target duration is either the difference between a moment when the first timer is started and a moment when the terminal receives the PDCP SDU, or a duration that the PDCP discard timer corresponding to the PDCP SDU has been running.

13. The method according to claim 1, 11, or 12, wherein the first timer duration is configured by the network device for each terminal, each radio bearer of the terminal, or the PDCP entity of the terminal.

14. A terminal, comprising:
a memory, a transceiver, and a processor; wherein the memory is configured to store a computer program; the transceiver is configured to send and receive data under the control of the processor; the processor is configured to read the computer program in the memory and perform the following operations:
receiving, by a Packet Data Convergence Protocol (PDCP) entity of a terminal, a PDCP Service Data Unit (SDU) from a higher layer;
when a first condition is met and the PDCP SDU is low-priority data, starting a first timer for the PDCP SDU; wherein the first condition comprises at least one of the following:
that first indication information sent by a network device for a first target object is received, wherein the first target object comprises one or more of the terminal, a radio bearer corresponding to the PDCP entity, or the PDCP entity, and the first indication information is used to indicate configuring, for the first target object, discard based on PDCP SDU priority or discard based on PDU Set Importance (PSI);
that second indication information sent by the network device for a second target object is received, wherein the second target object comprises one or more of the terminal, a radio bearer corresponding to the PDCP entity, or the PDCP entity, and the second indication information is used to indicate activating, for the second target object, discard based on PDCP SDU priority or discard based on PSI;
that one or more serving cells serving the terminal are in a congested state.

15. The terminal according to claim 14, wherein the processor is configured to read the computer program in the memory and perform the following operations: when a second condition is met, determining that the PDCP SDU is low-priority data, wherein the second condition comprises at least one of the following:
that a priority value of the PDCP SDU is less than or equal to a first threshold;
that a PSI value corresponding to the Packet Data Unit Set (PDU Set) to which the PDCP SDU belongs is less than or equal to a second threshold;
wherein the first threshold and/or the second threshold are determined by the terminal; or the first threshold and/or the second threshold are agreed upon by a protocol; or the first threshold and/or the second threshold are configured by the network device.

16. The terminal according to claim 14, wherein the processor is configured to read the computer program in the memory and perform the following operations:
when a third condition is met, stopping the first timer that is running;
or,
when a third condition is met and if the first timer expires, skipping performing PDCP SDU discard triggered by timeout of the first timer; wherein the third condition comprises at least one of the following:
that third indication information sent by the network device for the first target object is received, wherein the third indication information is used to indicate unconfiguring, for the first target object, discard based on PDCP SDU priority discard or discard based on PSI;
that fourth indication information sent by the network device for the second target object is received, wherein the fourth indication information is used to indicate deactivating, for the second target object, discard based on PDCP SDU priority or discard based on PSI;
that one or more serving cells serving the terminal are in a non-congested state.

17. The terminal according to claim 14 or 16, wherein the one or more serving cells serving the terminal are determined to be in a congested state or non-congested state by at least one of the following manners:
that fifth indication information sent by the network device is received, wherein the fifth indication information is used to indicate whether one or more serving cells serving the terminal are in the congested state or non-congested state;
that the terminal determines whether the one or more serving cells serving the terminal are in the congested state or non-congested state.

18. The terminal according to claim 14, wherein the processor is configured to read the computer program in the memory and perform the following operations:
starting the first timer and a PDCP discard timer simultaneously for the PDCP SDU;
or,
starting the first timer for the PDCP SDU.

19. The terminal according to claim 18, wherein when starting the first timer and the PDCP discard timer simultaneously for the PDCP SDU, the processor is configured to read the computer program in the memory and perform the following operations:
if either the first timer or the PDCP discard timer expires, performing at least one of the following operations:
discarding the PDCP SDU by the terminal;
stopping one or both, that are running, of the first timer and the PDCP discard timer by the terminal.

20. The terminal according to claim 18, wherein when starting the first timer for the PDCP SDU, the processor is configured to read the computer program in the memory and perform the following operations:
discarding the PDCP SDU if the first timer expires.

21. The terminal according to claim 19 or 20, wherein the processor is configured to read the computer program in the memory and perform at least one of the following operations:
directly discarding the PDCP SDU;
when the terminal determines that the PDCP Packet Data Unit (PDU) corresponding to the PDCP SDU has been delivered to a lower layer of the terminal, notifying the lower layer to discard the PDCP PDU;
discarding the PDCP SDU by the terminal if the first condition is met.

22. The terminal according to claim 17, wherein the processor is configured to read the computer program in the memory and perform the following operations:
when starting the first timer and the PDCP discard timer simultaneously for the PDCP SDU, determining whether to trigger a Delay Status Report (DSR) based on the PDCP discard timer or the first timer;
or,
when starting the first timer for the PDCP SDU, determining based on the first timer whether to trigger the DSR ;
or,
when starting the first timer for the PDCP SDU by the terminal, prohibiting triggering the DSR.

23. The terminal according to claim 22, wherein the processor is configured to read the computer program in the memory and perform the following operations:
triggering the DSR if the remaining running time of the first timer is less than a third threshold.

24. The terminal according to claim 14, wherein the processor is configured to read the computer program in the memory and perform the following operations:
for PDCP SDUs already stored in a buffer of the terminal, when the first condition is met and the PDCP SDU in the buffer are low-priority data, starting the first timer for the PDCP SDU in the buffer.

25. The terminal according to claim 24, wherein a duration of the first timer corresponding to the PDCP SDU in the buffer is determined by at least one of the following:
that the duration of the first timer corresponding to the PDCP SDU in the buffer is equal to a first timer duration configured by a network device;
that the duration of the first timer corresponding to the PDCP SDU in the buffer is equal to the difference between the first timer duration configured by the network device and a target duration, wherein the target duration is either the difference between a moment when the first timer is started and a moment when the terminal receives the PDCP SDU, or a duration that the PDCP discard timer corresponding to the PDCP SDU has been running.

26. The terminal according to claim 14, 24, or 25, wherein the first timer duration is configured by the network device for each terminal, each radio bearer of the terminal, or the PDCP entity of the terminal.

27. A terminal, comprising:
a receiving unit, configured to receive a PDCP Service Data Unit (SDU) from a higher layer;
a starting unit, configured to when a first condition is met and the PDCP SDU is low-priority data, start a first timer for the PDCP SDU by the terminal; wherein the first condition comprises at least one of the following:
that first indication information sent by a network device for a first target object is received, wherein the first target object comprises one or more of the terminal, a radio bearer corresponding to the PDCP entity, or the PDCP entity, and the first indication information is used to indicate configuring, for the first target object, discard based on PDCP SDU priority or discard based on PDU Set Importance (PSI);
that second indication information sent by the network device for a second target object is received, wherein the second target object comprises one or more of the terminal, a radio bearer corresponding to the PDCP entity, or the PDCP entity, and the second indication information is used to indicate activating, for the second target object, discard based on PDCP SDU priority or discard based on PSI;
that one or more serving cells serving the terminal are in a congested state.

28. The terminal according to claim 27, further comprising:
a determining unit, configured to when a second condition is met, determine that the PDCP SDU is low-priority data, wherein the second condition comprises at least one of the following:
that a priority value of the PDCP SDU is less than or equal to a first threshold;
that a PSI value corresponding to the Packet Data Unit Set (PDU Set) to which the PDCP SDU belongs is less than or equal to a second threshold;
wherein the first threshold and/or the second threshold are determined by the terminal; or the first threshold and/or the second threshold are agreed upon by a protocol; or the first threshold and/or the second threshold are configured by the network device.

29. The terminal according to claim 27, further comprising:
a stop unit, configured to when a third condition is met, stopp the first timer that is running;
or,
a first processing unit, configured to when a third condition is met and if the first timer expires, skip performing PDCP SDU discard triggered by timeout of the first timer; wherein the third condition comprises at least one of the following:
that third indication information sent by the network device for the first target object is received, wherein the third indication information is used to indicate unconfiguring, for the first target object, discard based on PDCP SDU priority discard or discard based on PSI;
that fourth indication information sent by the network device for the second target object is received, wherein the fourth indication information is used to indicate deactivating, for the second target object, discard based on PDCP SDU priority or discard based on PSI;
that one or more serving cells serving the terminal are in a non-congested state.

30. The terminal according to claim 27 or 29, wherein the one or more serving cells serving the terminal are determined to be in a congested state or non-congested state by at least one of the following manners:
that fifth indication information sent by the network device is received, wherein the fifth indication information is used to indicate whether one or more serving cells serving the terminal are in the congested state or non-congested state;
that the terminal determines whether the one or more serving cells serving the terminal are in the congested state or non-congested state.

31. The terminal according to claim 27, wherein the starting unit is further configured to:
start the first timer and a PDCP discard timer simultaneously for the PDCP SDU;
or,
start the first timer for the PDCP SDU.

32. The terminal according to claim 31, wherein when starting the first timer and the PDCP discard timer simultaneously for the PDCP SDU, the terminal further comprises:
a second processing unit, configured to if either the first timer or the PDCP discard timer expires, perform at least one of the following operations:
discarding the PDCP SDU;
stopping one or both, that are running, of the first timer and the PDCP discard timer by the terminal.

33. The terminal according to claim 31, wherein when starting the first timer for the PDCP SDU, the terminal further comprises:
a discarding unit, configured to discard the PDCP SDU if the first timer expires.

34. The terminal according to claim 32 or 33, wherein the second processing unit or the discarding unit is further configured to perform at least one of the following:
directly discarding the PDCP SDU;
when the terminal determines that the PDCP Packet Data Unit (PDU) corresponding to the PDCP SDU has been delivered to a lower layer of the terminal, notifying the lower layer to discard the PDCP PDU;
discarding the PDCP SDU if the first condition is met.

35. The terminal according to claim 30, further comprising:
a third processing unit, configured to when starting the first timer and the PDCP discard timer simultaneously for the PDCP SDU, determine whether to trigger a Delay Status Report (DSR) based on the PDCP discard timer or the first timer;
or,
a fourth processing unit, configured to when starting the first timer for the PDCP SDU, determine based on the first timer whether to trigger the DSR;
or,
a fifth processing unit, configured to when starting the first timer for the PDCP SDU, prohibit triggering the DSR.

36. The terminal according to claim 35, wherein the third processing unit or the fourth processing unit is further configured to:
trigger the DSR if the remaining running time of the first timer is less than a third threshold.

37. The terminal according to claim 27, further comprising:
a sixth processing unit, configured to for PDCP SDUs already stored in a buffer of the terminal, when the first condition is met and the PDCP SDU in the buffer are low-priority data, start the first timer for the PDCP SDU in the buffer.

38. The terminal according to claim 37, wherein a duration of the first timer corresponding to the PDCP SDU in the buffer is determined by at least one of the following:
that the duration of the first timer corresponding to the PDCP SDU in the buffer is equal to a first timer duration configured by a network device;
that the duration of the first timer corresponding to the PDCP SDU in the buffer is equal to the difference between the first timer duration configured by the network device and a target duration, wherein the target duration is either the difference between a moment when the first timer is started and a moment when the terminal receives the PDCP SDU, or a duration that the PDCP discard timer corresponding to the PDCP SDU has been running.

39. The terminal according to claim 27, 37, or 38, wherein the first timer duration is configured by the network device for each terminal, each radio bearer of the terminal, or the PDCP entity of the terminal.

40. A processor-readable storage medium, wherein the processor-readable storage medium stores a computer program configured to cause a processor to execute the steps of the data processing method according to any one of claims 1 to 13.
